(19) Europäisches Patentamt
European Patent Office
Office européen des brevets

(11) **EP 3 622 270 B1**

(12) **EUROPÄISCHE PATENTSCHRIFT**

(45) Veröffentlichungstag und Bekanntmachung des Hinweises auf die Patenterteilung:
**21.02.2024   Patentblatt 2024/08**

(21) Anmeldenummer: **18722967.9**

(22) Anmeldetag: **04.05.2018**

(51) Internationale Patentklassifikation (IPC):
**G01N 21/3504** (2014.01)    **G01N 21/03** (2006.01)
**G01N 21/39** (2006.01)    **G01J 3/42** (2006.01)
**G01J 3/02** (2006.01)

(52) Gemeinsame Patentklassifikation (CPC):
**G01N 21/031; G01J 3/42; G01N 21/3504;**
G01J 3/0208; G01J 2003/423; G01N 21/39;
G01N 2021/399; G01N 2201/0634;
G01N 2201/0638

(86) Internationale Anmeldenummer:
**PCT/EP2018/061461**

(87) Internationale Veröffentlichungsnummer:
**WO 2018/210583 (22.11.2018 Gazette 2018/47)**

(54) **GASMESSSYSTEM**

GAS MEASUREMENT SYSTEM

SYSTÈME DE MESURE DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2017   EP 17170667**

(43) Veröffentlichungstag der Anmeldung:
**18.03.2020   Patentblatt 2020/12**

(73) Patentinhaber: **Mettler-Toledo GmbH
8606 Greifensee (CH)**

(72) Erfinder:
• **VENTURINI, Francesca
8600 Dübendorf (CH)**
• **BERGSTRÖM, Pär
8700 Küsnacht (CH)**
• **HERTEL, Martin
79585 Steinen (DE)**

(74) Vertreter: **Mettler-Toledo
IP Department
Im Langacher 44
8606 Greifensee (CH)**

(56) Entgegenhaltungen:
**EP-A1- 2 520 924       US-A- 4 709 150**

**US-A1- 2007 134 748      US-B1- 6 469 303**

• **VENTURINI F ET AL: "Characterization of strongly scattering nanoporous materials as miniaturized multipass cell for tunable diode laser absorption spectroscopy", APPLIED PHYSICS B: LASERS AND OPTICS, SPRINGER INTERNATIONAL, BERLIN, DE, Bd. 123, Nr. 4, 10. April 2017 (2017-04-10), Seiten 1-8, XP036208542, ISSN: 0946-2171, DOI: 10.1007/S00340-017-6705-Z [gefunden am 2017-04-10]**
• **Svensson Tomas ET AL: "High sensitivity gas spectroscopy of porous, highly scattering solids", Optics Letters, vol. 33, no. 1, 1 January 2008 (2008-01-01), pages 80-82, XP055849953, US ISSN: 0146-9592, DOI: 10.1364/OL.33.000080 Retrieved from the Internet: URL:https://www.osapublishing.org/DirectPDFAccess/47D2B4A7-98D6-41A9-B140B98534F5829 C_148598/ol-33-1-80.pdf?da=1&id=148598&seq=0&mobile=no>**

EP 3 622 270 B1

**EP 3 622 270 B1**

- Jim Larsson ET AL: "Development of a compact multipass oxygen sensor used for gas diffusion studies in opaque media", Applied Optics, vol. 54, no. 33, 16 November 2015 (2015-11-16), page 9772, XP055492315, US ISSN: 0003-6935, DOI: 10.1364/AO.54.009772
- Svensson Tomas ET AL: "Disordered, Strongly Scattering Porous Materials as Miniature Multipass Gas Cells", Physical Review Letters, vol. 107, 30 September 2011 (2011-09-30), pages 143901-1, XP055849898, US ISSN: 0031-9007, DOI: 10.1103/PhysRevLett.107.143901 Retrieved from the Internet: URL:https://journals.aps.org/prl/pdf/10.11 03/PhysRevLett.107.143901>
- Svensson Tomas ET AL: "Laser spectroscopy of gas confined in nanoporous materials", Appl. Phys. Lett. Appl. Phys. Lett, vol. 96, 13 January 2010 (2010-01-13), pages 021107-1, XP055849909, Retrieved from the Internet: URL:https://aip.scitation.org/doi/pdf/10.1 063/1.3292210>
- Svensson T. ET AL: "Pore size assessment based on wall collision broadening of spectral lines of confined gas: experiments on strongly scattering nanoporous ceramics with fine-tuned pore sizes", APPLIED PHYSICS B: LASERS AND OPTICS., vol. 110, no. 2, 21 April 2012 (2012-04-21), pages 147-154, XP055849895, DE ISSN: 0946-2171, DOI: 10.1007/s00340-012-5011-z Retrieved from the Internet: URL:https://link.springer.com/content/pdf/ 10.1007/s00340-012-5011-z.pdf>
- Lewander Märta: "Laser Absorption Spectroscopy of Gas in Scattering Media" In: "Laser Absorption Spectroscopy of Gas in Scattering Media", 1 January 2010 (2010-01-01), Lund University, XP055849913,

**Beschreibung**

Die Erfindung betrifft ein Gasmesssystem mit einer Gas-Zelle. Das Gasmesssystem dient der absorptions-spektroskopischen Bestimmung mindestens eines chemischen und/oder physikalischen Parameters eines gasförmigen Messmediums.

Die Absorptions-Spektroskopie und insbesondere die sogenannte Diodenlaser-Absorptions-Spektroskopie mittels durchstimmbarem Laser, auch als TDLAS (tunable diode laser absorption spectroscopy) bezeichnet, erlaubt es die spezifische Absorption eines Gases zu untersuchen, wie zum Beispiel Sauerstoff ($O_2$), Kohlendioxid ($CO_2$), Kohlenmonoxid (CO), Stickoxide (NOx), Methan ($CH_4$), Amine, Ammoniak ($NH_3$), Schwefelwasserstoffe ($H_2S$), Schwefeloxide ($SO_2$), Halogenwasserstoffverbindungen, wie HCl oder HF, Wasser bzw. Feuchte ($H_2O$) oder sogar Mischungen daraus, und dadurch dessen Konzentration in einem Messmedium zu bestimmen. Die Einsatzgebiete für beispielsweise Sauerstoff-Messsysteme reichen dabei von einfachen Anwendungen im Bereich Abgasüberwachung bis zu komplexen Prozesssteuerungen in Bereich Chemie und Petrochemie. Weitere beispielhafte Einsatzgebiete umfassen die Steuerung von Verbrennungsprozessen in der Energieerzeugung und Müllverbrennung.

Gemessen wird meist in einer Transmissions-Anordnung, wobei auch Messungen in Transflexions-Anordnung bekannt sind. Die von einer kohärenten Lichtquelle, wie einem Laser oder Diodenlaser ausgesandte Strahlung wird durch das Messmedium gelenkt und nach Interaktion mit demselben von einem geeigneten Detektor detektiert.

Die Nachweisempfindlichkeit solcher Messungen ist gemäss dem Lambert-Beerschen Gesetz von der Absorptionsstrecke abhängig, also der optischen Weglänge des Lichts im zu analysierenden Gas. Wobei zur Bestimmung von kleineren Konzentrationen eine längere Absorptionsstrecke notwendig ist.

Im Falle der TDLAS wird das Messmedium mit der Strahlung eines durchstimmbaren Lasers durchstrahlt. Die Wellenlänge der Strahlung wird dabei in einem vorgegebenen Wellenlängenbereich periodisch variiert, wobei der vom Laser durchlaufene Wellenlängenbereich vorzugsweise eine oder mehrere Absorptionsbanden des zu untersuchenden Gases umfasst. Der abgedeckte Wellenlängenbereich wird durch den verwendeten Laser, genauer den verwendeten Diodenlaser, bestimmt. Es ist eine Vielzahl von Lasern und Diodenlasern bekannt. Sogenannte DFB-Laser (distributed feedback laser) können Wellenlängenbereiche zwischen etwa 700 nm und etwa 3 $\mu$m abdecken. Sogenannte VCSEL-Laser (vertical-cavity surface-emitting laser) können Wellenlängenbereiche bis etwa 2.1 $\mu$m, QCL-Laser (quantum cascade laser) Wellenlängenbereiche oberhalb von etwa 3.5 $\mu$m oder sogar oberhalb von etwa 4.3 $\mu$m und ICL-Laser (interband cascade laser) Wellenlängenbereiche von etwa 3 $\mu$m bis 6 $\mu$m abdecken.

Ein Ansatz zur Verlängerung der optischen Weglänge für die Messung kleiner oder niedriger Konzentrationen stellt die Verwendung von porösen keramischen Materialien als Teil der Gas-Zelle dar, insbesondere von mikro- oder nanoporösen Keramiken. Allerdings konnte bereits gezeigt werden, dass die Verwendung solcher Materialien im Strahlengang aufgrund der Streuung an genau diesem porösen Material zur unerwünschten Interferenzeffekten, sog. Speckle-Bildung auf dem Detektor führt, was in der dynamischen Situation von Wellenlängenscans zu einem sehr stark verrauschten Signal führt.

T. Svensson, et al. Phys. Rev. Lett. 107, 143901 (2011) beschreibt Untersuchungen zur Interaktion von Licht und Gas in stark streuenden nano- und mikro-porösen Materialien, wie insbesondere gesinterte Keramiken mit unterschiedlichen Porengrössen aus Titandioxid ($TiO_2$), Zirkondioxid ($ZrO_2$) oder Aluminiumoxid ($Al_2O_3$). Es konnte gezeigt werden, dass Licht von derartigen porösen Keramiken zufällig - oder mikro-gestreut (eng. random scattering) wird und dadurch die optische Weglänge im Verhältnis zur tatsächlichen Dicke des durchstrahlten keramischen Materials stark verlängert wird. Es wurde zudem gezeigt, dass sich diese Materialien prinzipiell als miniaturisierte Multipass Gas-Zelle für die TDLAS Bestimmung von Sauerstoff bei 760 nm eignen, wobei sich Titandioxid auf Grund einer starken Absorptionsbande bei 760 nm als weniger geeignet herausgestellt hat.

Eine bekannte Limitation der spektroskopischen Untersuchungen an stark streuenden porösen Materialien stellt das optische Interferenzrauschen (eng. optical interference noise) dar, welches zum Beispiel durch Laser Beam Dithering unterdrückt werden kann, welches T. Svensson et al., Opt. Lett. 33 (1), 80 (2008) genauer beschreibt. Dazu kann die Probe rotiert werden und/oder "Tracking Coils" eingesetzt werden, welche eine Linse umfassen die in der Nähe von zwei Spulen angeordnet ist und dadurch eine Anpassung der Linsenposition ermöglichen.

J. Larsson, et al. Appl. Optics 54 (33), 9772 (2015) beschreibt ebenfalls die Verwendung von stark streuenden porösen Keramiken als Multipass-Zelle in einer TDLAS Anordnung, um Sauerstoff in Holz als optisch undurchsichtigem Medium bei 760 nm mittels Wellenlängen-modulierter Spektroskopie zu bestimmen, wobei die Wellenlängen Modulation dazu dient die Sensitivität des Messsystems durch Rausch-Unterdrückung zu verbessern. Es wurde ein Stück des keramischen Materials von etwa 5 mm Dicke in das zu untersuchende Holz eingebracht und das an dem Material gestreute Laserlicht detektiert, welches über eine erste Optische Fiber in das Material eingekoppelt und über eine zweite optische Fiber wieder ausgekoppelt wurde. In diesem Experiment wurden die störenden optischen Interferenzen unterdrückt, indem die optischen Komponenten mittels kleiner Motoren bewegt wurden.

CN 102 621 063 B offenbart ein Gasmesssystem mit einer Gas-Zelle aus porösem Aluminiumoxid, wobei zur Unterdrückung des Interferenzrauschens ein Kollimator zur Optimierung des Laserstrahls, welcher durch eine an die Gas-Zelle angekoppelte Fiber geleitet wird, eingesetzt wird.

CN 202 590 092 A offenbart ein Gasmesssystem mit einem Laser und einer Gas-Zelle mit einem Kern aus porösem Material, wobei der Detektor für das gestreute Laserlicht auf einem dreidimensionalen Verschiebetisch angeordnet ist, so dass der Detektor verschoben werden kann, um die gewünschte optische Weglänge einzustellen bzw. zu erfassen.

EP 2 520 924 A1 offenbart ein Verfahren und eine Messanordnung zur Verbesserung der Signalauflösung bei der Gasspektroskopie bei welcher störende Signalanteile zeitlich gemittelt werden. Die Messanordnung umfasst dazu einen der Laserlichtquelle nachgeordneten Lichtmodulator, der die optische Weglänge des Lichtstrahls kontinuierlich periodisch beeinflusst. Der Lichtmodulator weist dazu ein Optikelement mit einstellbarem Brechungsindex auf, das die Phase der Laserlichts des Laserstrahle kontinuierlich zyklisch verändert. Weiterhin kann die Messanordnung eine Gas-Zelle mit einem Materialblock mit poröser Struktur umfassen.

Die bekannten Möglichkeiten zur Unterdrückung des Interferenzrauschens sind in kommerziellen Gasmesssystemen in einer Prozessumgebung so nicht umsetzbar, da eine Bewegung der optischen Komponenten des Messsystems mechanisch komplex ist, viel Raum sowie auch eine komplexe elektronische Ansteuerung benötigt, wodurch derartige Gasmesssysteme gross und/oder wartungsanfällig werden.

Aufgabe der Erfindung ist daher die Bereitstellung eines robusten Gasmesssystems mit einer kompakten Gas-Zelle, die eine poröse Keramik enthält, und ein verbessertes Signal / Rausch-Verhältnis aufweist.

Gelöst wird diese Aufgabe durch ein erfindungsgemässes Gasmesssystem, welches eine kohärente Lichtquelle, die einen Lichtstrahl aussendet, einen Detektor, einen Strahlengang, der zwischen der Lichtquelle und dem Detektor ausgebildet ist, und eine Gas-Zelle, welche zwischen der Lichtquelle und dem Detektor im Strahlengang angeordnet ist, so dass der Detektor das durch die Gas-Zelle transmittierte Licht empfängt. Die Gas-Zelle enthält ein poröses keramisches Material und weist eine optische Weglänge auf, welche ein Vielfaches der tatsächlichen Schichtdicke des porösen keramischen Materials in der Gas-Zelle ist. Ferner ist ein optisches Element im Strahlengang zwischen der Lichtquelle und der Gas-Zelle angeordnet und der von der Lichtquelle ausgesandte Lichtstrahl ist beim Eintritt in das poröse keramische Material in der Gas-Zelle aufgeweitet und unfokussiert. Das optische Element ist entweder ein optisch transparentes Fenster, wobei die Aufweitung des Lichtstrahls auf Grund der Divergenz des Lichtstrahls erfolgt; oder das optische Element umfasst einen Diffusor- oder mindestens ein diffraktives optisches Element, welche den Lichtstrahl verformt; so dass der von der Lichtquelle ausgesandte Lichtstrahl beim Eintritt in die Gas-Zelle aufgeweitet und unfokussiert ist.

Aufgrund der Verwendung einer porösen Keramik in der Gas-Zelle wird das in die Gas-Zelle, genauer in die poröse Keramik, eintretende Licht innerhalb der Keramik mehrfach reflektiert oder zufällig gestreut bevor es die Keramik wieder verlässt, woraus eine optische Weglänge resultiert, welche ein Vielfaches der tatsächlichen Schichtdicke der Gas-Zelle und insbesondere der Schichtdicke der porösen Keramik ist.

Wie bereits eingangs beschrieben, führt die Verwendung derartiger poröser Keramiken zu unerwünschten Interferenzen und Speckle-Bildung. Diese wird in dem erfindungsgemässen Gas-Messsystem unterdrückt, indem der von der Lichtquelle ausgesandte Lichtstrahl beim Eintritt in die Gas-Zelle aufgeweitet und unfokussiert ist, wodurch sich die auftretenden Interferenzen gegenseitig aufheben und aus dem Messsignal ausgemittelt werden können.

Vorzugsweise ist die Phase der von der Lichtquelle ausgesandten Lichtwelle bzw. des Lichtstrahls möglichst durchmischt. Unter der Annahme eines Gauss'schen Strahls, würde dieses bedeuten, dass die Wellenfronten, welche weiter von der Strahltaille entfernt sind stärker gekrümmt sind.

Realisierbar sind optische Weglängen die mindestens 10mal und insbesondere mindestens 50mal grösser bzw. länger sind als die tatsächliche Schichtdicke der porösen Keramik in der Gas-Zelle. Unter optimalen Bedingungen können sogar optische Weglängen realisiert werden, die bis zu mehrere 100mal länger sind als die tatsächliche Schichtdicke. Unter dem Begriff tatsächliche Schichtdicke der Gas-Zelle, wird die Dicke der Gas-Zelle verstanden, welcher der Strecke entspricht, die das Licht ohne zufällige Streuung an der porösen Keramik durch die Gas-Zelle hindurch zurücklegen würde. Die extreme Verlängerung der optischen Weglänge ermöglicht erst den Aufbau eines sehr kleinen, kompakten Gasmesssystems. Eine entsprechend kleine Gas-Zelle hat zudem den Vorteil, dass aufgrund des kleinen Probenvolumens, sehr schnelle Gas-Austauschzeiten realisiert werden können und damit auch schnelle Konzentrationsänderungen im zu untersuchenden Gas verlässlich erfasst und untersucht werden können.

In einer Ausgestaltung ist das optische Element ein optisch transparentes Fenster, insbesondere ein Prozessfenster. Das optisch transparente Fenster dient vor allem dazu die Gas-Zelle von den anderen optischen Bauteilen, wie insbesondere der Lichtquelle und dem Detektor abzutrennen und zu verhindern, dass beispielsweise das zu messende Gas aus der Gas-Zelle hinaus in die anderen Bauteile des Gasmesssystems eindringen kann. Dieses ist insbesondere dann wichtig, wenn zur Aufweitung des Lichtstrahls nur die "natürliche" Divergenz des Lichtstrahls ausgenutzt wird.

In einer weiteren Ausgestaltung verformt das optische Element den Lichtstrahl, wobei das optische Element einen Diffusor oder ein diffraktives optisches Element oder eine Kombination von diffraktiven Elementen umfasst. Ein derart ausgestaltetes optisches Element wirkt aktiv auf den Lichtstrahl ein und dient dazu, diesen aufzuweiten, so dass ein aufgeweiteter und unfokussierter Lichtstrahl in die Gas-Zelle eintreten kann. Eine derartige Strahlaufweitung kann beispielsweise durch den Einsatz von einer Zylinderlinse, einer Zylinderlinse in Kombination mit einer Blende, einem Linsen-Array oder einer Powell Linse erreicht werden. Anstelle eines diffraktiven optischen Elements kann auch ein refraktives optisches Element zur Strahlaufweitung eingesetzt werden.

Die Verwendung eines optischen Elements oder der natürlichen Divergenz des Lichtstrahls zur Aufweitung des Lichtstrahls ist besonders vorteilhaft, da auf dieses Weise die Verwendung von mechanisch beweglichen Bauteilen und/oder komplexer elektronischer Ansteuerungen vermieden werden kann, was den Aufbau von kleinen und kompakten Gas-Messsystemen ermöglicht.

In einer weiteren Ausgestaltung kann das optische Element, welches den Lichtstrahl verformt, zudem als Prozessfenster wirken. Diese Ausgestaltung hat insbesondere Vorzüge, wenn das erfindungsgemässe Gasmesssystem besonders klein und kompakt gestaltet ist, da das optische Element sowohl für die Strahlverformung als auch zur Abtrennung der Gas-Zelle dienen kann.

Das Gasmesssystem kann zudem ein weiteres optisches Element umfassen, welches zwischen der Gas-Zelle und dem Detektor im Strahlengang angeordnet ist und ein optisches Fenster oder einen Reflektor umfasst. Je nach Ausgestaltung des Gasmesssystems dient das weitere optische Element dazu den Detektor von der Gas-Zelle räumlich abzutrennen, dieses ist vor allem bei einer Transmissionsanordnung relevant, oder das weitere optische Element wirkt als Reflektor und ermöglicht, dass der Lichtstrahl nach Austritt aus der Gas-Zelle zu dieser zurück reflektiert und erst nach nochmaligen Durchgang durch die Gas-Zelle zum Detektor geleitet wird, was auch als Transflexions-Anordnung bezeichnet wird.

Die kohärente Lichtquelle des Gasmesssystems ist vorzugsweise ein Laser und insbesondere ein durchstimmbarer Laser. Für die Bestimmung von Sauerstoff eignet sich beispielsweise ein Laser, welcher im Bereich von 760 nm emittiert oder variiert werden kann, und für die Bestimmung von $NH_3$ ein Laser, welcher im Bereich um 1500 nm emittiert oder moduliert werden kann, da in diesen Bereichen jeweils eine starke Absorptionsbande von Sauerstoff oder $NH_3$ liegt.

Der Detektor ist als Photodetektor ausgestaltet, beispielsweise als Thermophil-Detektor, Bolometer, Pyroelektrischer Detektor, Photomultiplier, Photodiode oder Photoresistor. Die Wahl des Detektors wird dabei insbesondere von der Wellenlänge der zu detektierenden Strahlung bzw. des zu detektierenden Lichts bestimmt.

In einer weiteren Ausgestaltung weist das erfindungsgemässe Gasmesssystem ferner eine der Gas-Zelle vorgeschaltete Probenaufbereitungs-Einheit auf. Auf diese Weise ist es zum Beispiel möglich störende Verunreinigungen aus dem Messmedium zu entfernen und/oder eine Probe aus einem Behältnis oder einer Prozessumgebung zu entfernen und anschliessend zu messen.

Das Gasmesssystem ist vorzugsweise NeSSI kompatibel. NeSSI steht für New Sampling / Sensor Initiative - eine Initiative der University of Washington, Seattle, welche durch Standardisierung von Dichtungs- und Kopplungssystemen mit zugehörigen Ventilen, Druckreduzierern, Filtern und weiteren Komponenten den modularen Aufbau von Sampling- und/oder Mess-Systemen auf kleinem oder sogar kleinstem Raum ermöglicht.

Die in der Gas-Zelle eingesetzte poröse Keramik ist vorzugweise nano- oder mikro-porös. Die optimale Porengrösse der Keramik muss dabei experimentell ermittelt werden und hängt sowohl von der verwendeten Wellenlänge und damit vom zu untersuchenden Gas, als auch vom eingesetzten Keramik-Material ab.

Die poröse Keramik umfasst vorzugsweise Zirkonoxid, Aluminiumoxid, Titanoxid, Siliziumoxid, Magnesiumoxid, Yttriumoxid, Galliumphosphid, poröses Silizium oder Mischungen daraus.

Je nach Ausgestaltung des Gasmesssystems, kann dieses zur Bestimmung des Gehalts eines oder mehrerer der folgenden Gase eingesetzt werden: Sauerstoff (O2), Kohlendioxid (CO2),Kohlenmonoxid (CO), Stickoxide (NOx), Methan (CH4), Amine, Ammoniak (NH3), Schwefelwasserstoffe (H2S), Schwefeloxide (SO2), Halogenwasserstoffverbindungen, wie HCl oder HF, Wasser bzw. Feuchte (H2O) oder Mischungen daraus.

Verschiedene Ausführungsformen eines erfindungsgemässen Gasmesssystems werden nachfolgend anhand der Figuren beschrieben. Die Figuren zeigen:

Fig. 1    Schematische Darstellung eines erfindungsgemässen Gasmesssystems in Transmission;

Fig. 2    Schematische Darstellung eines erfindungsgemässen Gasmesssystems in Transflexion;

Fig. 3    Schematische Darstellung des optischen Strahlengangs;

Fig. 4    Explosions-Darstellung eines erfindungsgemässen Gasmesssystems in Transmission, welches NeSSI kompatibel ist;

Fig. 5    Schematische Darstellung des kompakten Gasmesssystems aus Figur 4 im Schnitt;

Fig. 6    Vergleichende Messung der Sauerstoff Absorptionslinie mit einem auf die Gas-Zelle fokussierten bzw. einem aufgeweiteten Lichtstrahl.

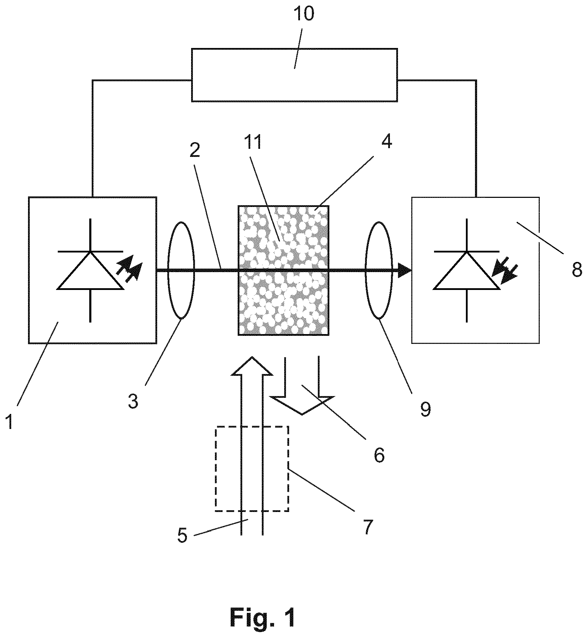

Figur 1 zeigt die schematische Darstellung eines erfindungsgemässen Gasmesssystems in Transmission. Das Gasmesssystem umfasst eine kohärente Lichtquelle 1, welche entlang eines durch einen Pfeil angedeuteten Strahlengangs 2 Licht oder Strahlung aussendet. Als kohärente Lichtquelle können Laser, Diodenlaser und insbesondere durchstimmbare Diodenlaser eingesetzt werden, wobei die Wellenlänge des eingestrahlten Lichts anhand des zu bestimmenden Gases ausgewählt wird. Zur Bestimmung von Sauerstoff kann zum Beispiel insbesondere eine kohärente Lichtquelle 1 mit einer Wellenlänge von 760 nm eingesetzt werden.

Das Licht der Lichtquelle 1 wird durch ein optisches Element 3 in eine Gas-Zelle 4 gelenkt, welche eine poröse Keramik 11 enthält. Die poröse Keramik 11 ist vorzugsweise eine mikro- oder nanoporöse Keramik 11, welche Zirkonoxid, Aluminiumoxid, Titanoxid, Silikate, Magnesiumoxid, Yttriumoxid, Galliumphosphid, poröses Silizium oder Mischungen daraus umfasst. Die Porengrössen der porösen Keramik 11 werden dabei anhand der eingesetzten Wellenlänge der kohärenten Lichtquelle ausgewählt, und liegenvorzugsweise zwischen 20 nm und 5 $\mu$m. Für Anwendungen mit Wellen-längen im MIR (Mittleren Infrarot) können Keramiken mit Porengrössen von bis zu 10 $\mu$m eingesetzt werden. Für die Bestimmung von Sauerstoff bei 760 nm eignet sich insbesondere Zirkondioxid mit einer Porengrösse von ca. 100 nm.

Der auf die Gas-Zelle 4 auftreffende bzw. in die Gas-Zelle 4 einfallende Lichtstrahl ist vorzugsweise unfokussiert und aufgeweitet, so dass die poröse Keramik 11 flächig und nicht nur punktuell, wie bei einem fokussierten Strahl, beleuchtet wird. Experimentell konnte gezeigt werden, dass bei Verwendung einer scheibenförmigen Keramik 11 mit einem Durchmesser von ca. 18 mm ein Strahldurchmesser von etwa 4 mm eine ausreichende Interferenz-Unterdrückung hervorrief.

Die Strahlaufweitung kann bereits durch die "natürliche" Divergenz des aus der Lichtquelle 1 austretenden Lichts über eine gewisse Distanz erreicht werden. In diesem Fall kann das optische Element 3 als optisch durchlässiges Fenster bzw. Prozessfenster ohne spezifische abbildende Eigenschaften ausgebildet sein, und dient somit vor allem dazu die Lichtquelle von der Probe bzw. dem Messmedium abzutrennen. Weiterhin kann das optische Element als Diffusor oder diffraktives optisches Element ausgestaltet sein. Diese Elemente wirken vorzugsweise gleichzeitig als optisch durchlässiges Fenster oder sie können zusammen mit einem zusätzlichen Prozessfenster eingesetzt werden.

Die Gas-Zelle 4 umfasst weiterhin, wie hier angedeutet, Anschlüsse 5, 6 zum Einleiten bzw. Ausleiten einer zu untersuchenden gasförmigen Probe. Bei der Probe kann es sich zum Beispiel um ein gasförmiges Messmedium handeln, wie auch um eine vom Messmedium abgetrennte Probe. Die gasförmige Probe kann direkt oder über ein hier angedeutetes Probenentnahme- oder Probenvorbereitungs-System 7 in die Gas-Zelle 4 eingebracht werden. Es sind unterschiedliche Probenentnahme- oder Probenvorbereitungs-Systeme bekannt, mit denen eine gasförmige Probe aus einem Messmedium oder einer Prozessumgebung entnommen und je nach Ausgestaltung auch aufbereitet werden kann.

Das Licht interagiert in der Gas-Zelle 4 mit einer darin befindlichen Probe und wird nach Austritt aus der Gas-Zelle 4 auf einen geeigneten Detektor 8 gelenkt. Dazu kann wie hier beispielhaft gezeigt ein weiteres optisches Element 9 im Strahlengang zwischen Gas-Zelle 4 und Detektor 8 angeordnet sein. In einem Gasmesssystem in Transmission kann als weiteres optisches Element 9 beispielsweise eine Sammeloptik eingesetzt werden, welche das aus der Gas-Zelle 4 austretende Licht auf den Detektor 8 fokussiert. In einem besonders kompakten Gasmesssystem kann das weitere optische Element zudem als Prozessfenster dienen und so die Probe physisch vom Detektor 8 trennen. Der Detektor 8 wie auch die kohärente Lichtquelle 1 sind mit einer geeigneten Steuer- und/oder Regeleinheit 10 verbunden, welche auch eine Auswertungseinheit umfassen kann.

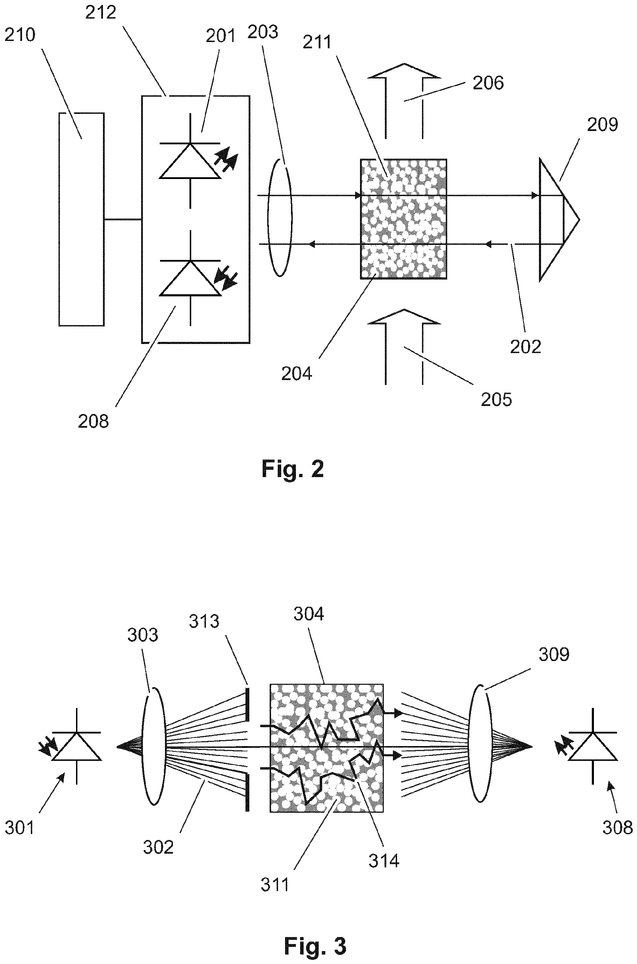

Figur 2 zeigt schematisch ein erfindungsgemässes Gasmesssystem in Transflexion, bei dem die kohärente Lichtquelle 201 und der Detektor 208 in einem gemeinsamen Gehäuse 212 angeordnet und mit einer geeigneten Steuer- und/oder Regeleinheit 210 verbunden sind. Ein von der Lichtquelle 201 ausgesandter Lichtstrahl, dessen Strahlengang 202 hier durch Pfeile angedeutet ist, wird durch ein optisches Element 203, welches vorzugsweise gleichzeitig als Prozessfenster dient, in eine Gas-Zelle 204 gelenkt, welche eine poröse Keramik 211 enthält. Das zu untersuchende Gas kann durch geeignete Ein- und Auslässe 205, 206 in die Gas-Zelle 204 eingebracht und wieder ausgetragen werden. In der hier beispielhaft gezeigten Ausführung wird die Gas-Probe durch die Gas-Zelle 204 hindurch geleitet. Nach Durchtritt durch die Keramik 211 bzw. die Gas-Zelle 204 wird das austretende Licht durch ein weiteres optisches Element 209, welches hier als Reflektor ausgestaltet ist, wieder durch die Gas-Zelle 205 und das optische Element 203 zurückgelenkt.

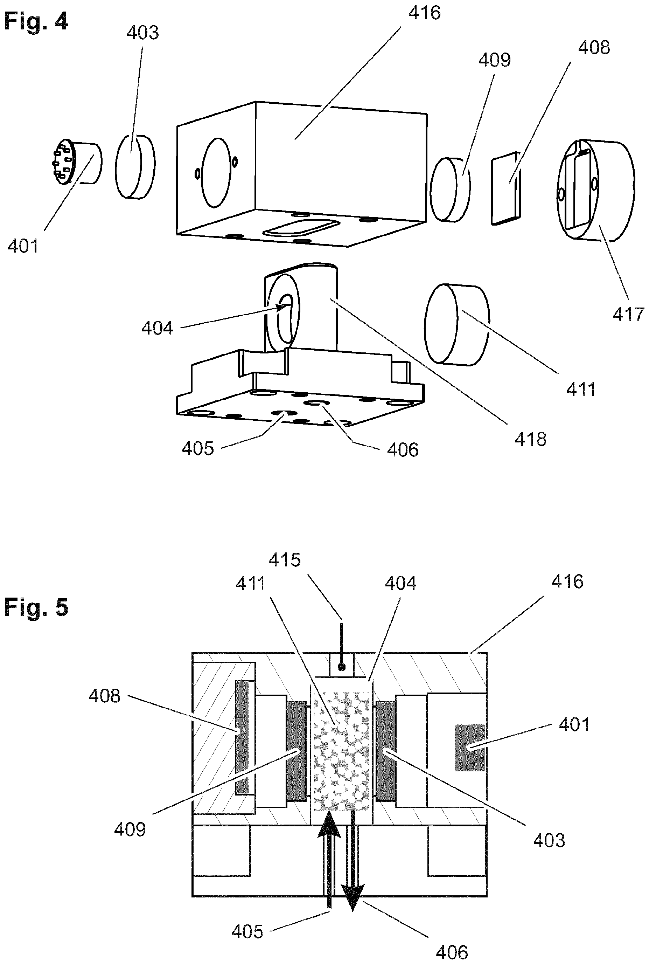

Figur 3 zeigt beispielhaft und schematisch den optischen Strahlengang eines erfindungsgemässen Gasmesssystems, zur besseren Übersicht ist nur der Strahlengang in Transmission dargestellt. Von einer kohärenten Lichtquelle 301 wird ein Lichtstrahl 302 ausgesendet, welcher durch ein optisches Element 303, eine Gas-Zelle und ein weiteres optisches Element 309 auf einen Detektor 308 gelenkt wird. Der ausgesandte Lichtstrahl 302 weitet sich bis zum Auftreffen auf die Gas-Zelle 304, genauer die darin enthaltene poröse Keramik 311, auf, so dass diese mit diffusen Laserlicht beleuchtet wird. Es konnte experimentell gezeigt werden, dass durch die Aufweitung des Licht- bzw. Laserstrahls die störenden Interferenzen, insbesondere die Speckle-Bildung stark unterdrückt und das Signal-Rausch-Verhältnis deutlich verbessert werden konnte, wie es in Figur 5 beispielhaft für die Messung einer Sauerstoff-Absorptionslinie gezeigt ist.

Das Gasmesssystem kann zudem, wie hier gezeigt, eine Blende 313 aufweisen, welche im Strahlengang 302 zwischen dem optischen Element 303 und der Gas-Zelle 304 angeordnet ist. Wird eine Iris-Blende eingesetzt, so ist es zudem möglich den Durchmesser des Lichtstrahls zu verändern und so die Intensität des in die Gas-Zelle 304 eintretenden Lichts zu verändern.

Die poröse Keramik 311 weist eine tatsächliche Schichtdicke von ca. 5 mm bis 10 mm auf, jedoch wird durch diffuse Reflektion an den in der Keramik vorliegenden Nano- oder Mikropartikeln der effektive optische Weg 314, den das Licht zurücklegt, um ein Vielfaches verlängert, wie es durch die Pfeile angedeutet wird. Die optische Weglänge der Gas-Zelle 304 ist somit um ein Vielfaches länger als deren tatsächliche Schichtdicke.

Das aus der Gas-Zelle austretende Licht wird durch das weitere optische Element 309 auf den Detektor 8 gelenkt. Die Ausgestaltung des weiteren optischen Elements 309 wurde im Zusammenhang mit Figur 1 für eine Transmissions-Anordnung und im Zusammenhang mit Figur 2 für eine Transflektions-Anordnung beschrieben.

Als optisches Element 3, 203, 303 und Gas-Zelle 4, 304, 404 können die bereits im Zusammenhang mit den Figuren 1 und 2 beschriebenen Varianten eingesetzt werden. Weiterhin kann der Lichtstrahl entlang des Strahlengangs 2, 202, 302 zwischen Lichtquelle 1, 201, 301 und Gas-Zelle 4, 204, 304 und/oder zwischen Gas-Zelle 4, 204, 34 und Detektor 8, 208, 308 ganz oder teilweise in Lichtleitern geführt werden.

Die Figur 4 und 5 zeigen ein erfindungsgemässes Gasmesssystems im Schnitt, welches NeSSI kompatibel ist. Figur 4 zeigt das erfindungsgemässe Gasmesssystems im Schnitt und Figur 5 als dreidimensionale Darstellung.

Licht von einer kohärenten Lichtquelle 401, wie zum Beispiel einem VCSEL Laser, wird durch ein optisches Element 403, welches hier sowohl als Prozessfenster als auch zur Aufweitung des Lichtstrahls dient, durch eine Gas-Zelle 404 mit einer porösen Keramik 411 gelenkt, wobei die poröse Keramik 411 mit einem aufgeweiteten Lichtstrahl beleuchtet wird. Die Gas-Zelle 404 weist zudem Gas-Anschlüsse 405, 406 auf, durch welche ein zu untersuchendes Gas in die Gas-Zelle 404 eingebracht bzw. wieder ausgetragen werden kann. Das zu untersuchende Gas kann direkt in die Gas-Zelle 404 eingeleitet werde oder wie bereits in Fig. 1 gezeigt zuvor durch ein Probenahmes-System 7 geleitet werden. Weiterhin weisst das Gasmesssystem mindestens einen Messfühler 415 auf, mit welchem beispielweise die Temperatur und/oder der Druck in der Gas-Zelle 404 ermittelt werden kann. Nach Transmission durch die Gas-Zelle 404 und insbesondere durch die poröse Keramik 411 wird das Licht bzw. der Lichtstrahl durch ein weiteres optisches Element 409, welches hier auch als Prozessfenster dient, auf einen Detektor 408 gelenkt. Der Detektor 408 ist beispielweise als Photodetektor ausgestaltet.

Das in den Figuren 4 und 5 als Explosionsdarstellung und im Schnitt gezeigte Gasmesssystem ist besonders klein und kompakt gestaltet, wobei im zusammengebauten Zustand alle optischen Bauteile in einem Gehäuseblock 416 angeordnet sind. Die Gas-Zelle 404 mit der porösen Keramik 411 ist vorzugsweise so gestaltet, dass insbesondere die Keramik 411 einfach ausgetauscht werden kann, wenn diese zum Beispiel verunreinigt ist. Die Gas-Zelle weist zudem Ein/Auslässe 405, 406 für das zu analysierende Gas auf. Dazu wird die poröse Keramik 411 als Scheibe in einem geeigneten Rahmen 418 befestigt, wie er zum Beispiel auch für die Befestigung von Linsen oder optischen Filtern bekannt ist. Ebenso kann die kohärente Lichtquelle 401 und/oder der Detektor 408, welcher in einer Halterung 417 angeordnet ist, ausgetauscht werden, dieses ist besonders vorteilhaft, da so mit demselben Aufbau unterschiedliche Gase bei unterschiedlichen Wellenlängen vermessen werden können.

Vorzugsweise ist das erfindungsgemässe Gasmesssystem NeSSI kompatibel. Ein Prototyp, wie in den Figuren 4 und 5 gezeigt, konnte beispielsweise als kompakter Würfel mit einer Seitenlänge von weniger als 5 cm realisiert werden. Die porösen Keramik 411 wurde dabei als Scheibe aus Zirkonoxid mit einem Durchmesser von ca. 16 mm, einer Schichtdicke von etwa 6.4 mm und einer Porengrösse von ca. 100 nm ausgestaltet, wodurch eine optischen Weglänge von bis zu etwa 5 m realisiert werden konnte. Dieses entspricht einer nahezu 800fachen Vergrösserung bzw. Verlängerung der tatsächlichen Schichtdicke der Gas-Zelle entspricht. Das geringe Volumen der Gas-Zelle 404, welches insbesondere durch die Dimensionen der porösen Keramik 411 gegeben ist, hat zudem den Vorteil, dass ein sehr schneller Gas-Austausch in der Gas-Zelle 404 realisiert werden kann und dadurch auch schnelle Konzentrationswechsel im Messmedium bzw. dem zu untersuchenden Gas erfasst werden können.

NeSSI steht für New Sampling / Sensor Initiative - eine Initiative der University of Washington, Seattle, welche durch Standardisierung von Dichtungs- und Kopplungssystemen mit zugehörigen Ventilen, Druckreduzierern, Filtern und weiteren Komponenten den modularen Aufbau von Sampling-Systemen und/oder Mess-Systemen auf kleinem Raum ermöglicht.

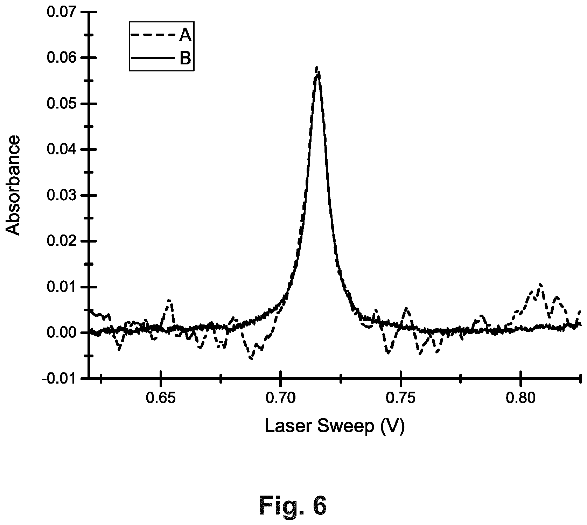

Figur 6 zeigt im Vergleich eine Messung der Sauerstoff Absorptionslinie mit einem auf die Gas-Zelle fokussierten (Linie A) bzw. einem erfindungsgemäss aufgeweiteten (B) Lichtstrahl (Linie B). Als kohärente Lichtquelle wurde ein VCSEL Laser mit einer Wellenlänge von 760 nm, als Detektor ein Photodetektor und als poröse Keramik eine Zirkondioxid-Scheibe mit einer Schichtdicke von etwa 6.4 mm verwendet. Die optische Weglänge durch die poröse Keramik hindurch wurde durch Kalibration in Luft als ca. 5 m ermittelt und beträgt somit ein nahezu 800faches der effektiven Schichtdicke. Die Porengrösse der verwendeten Zirkondioxid-Keramik lag bei ca. 100 nm. Die Messung A erfolgte mit einem Laserstrahl, welcher auf ca. 70 Mikron fokussiert wurde, und Messung B mit einem Laserstrahl, welcher auf ca. 4.1 mm Durchmesser aufgeweitet wurde. Dadurch wurde es möglich die Interferenzen, insbesondere die Speckle-Bildung stark zu unterdrücken, was sich in einem deutlich verbesserten Signal-Rausch-Verhältnis der mit aufgeweitetem Lichtstrahl aufgenommene Absorptionsline B zeigt. Es konnte zudem ein Speckle-Unterdrückungsfaktor, welcher das

$$\frac{\sigma_A}{\sigma_B} = 7.9$$

Verhältnis des Rauschens mit und ohne Speckle-Unterdrückung definiert von                ermittelt werden.

Diese deutliche Verbesserung des Signal-Rausch-Verhältnisses wird im erfindungsgemässen Gasmesssystem durch eine rein optische Lösung bzw. passive Lösung erzielt, welche weder bewegliche Elemente noch eine zusätzliche Elektronikansteuerung benötigt. Das erfindungsgemässe Gasmesssystem ist daher extrem robust und kann auch klein und kompakt realisiert werden.

**Liste der Bezugszeichen**

| | |
|---|---|
| 1, 201, 301, 401 | Lichtquelle |
| 2, 202, 302 | Strahlengang |
| 3, 203, 303, 403 | Optisches Element |
| 4, 204, 304, 404 | Gas-Zelle |
| 5, 205, 405, | Anschluss |
| 6, 206, 406 | Anschluss |
| 7 | Probenentnahme- oder Probenvorbereitungs-System |
| 8, 208, 308, 408 | Detektor |
| 9, 209, 309, 409 | Weiteres optisches Element |
| 10, 210, | Steuer- und/oder Regeleinheit |
| 11, 211, 311, 411 | Poröse Keramik |
| 212 | Gehäuse |
| 313 | Blende |
| 314 | Optischer Weg |
| 415 | Messfühler |
| 416 | Gehäuseblock |
| 417 | Halterung |
| 418 | Rahmen |

**Patentansprüche**

1.  Gasmesssystem, umfassend

    eine kohärente Lichtquelle (1, 201, 301, 401), welche einen Lichtstrahl aussendet; einen Detektor (8, 208, 308, 408);
    einen Strahlengang (2, 202, 302), der zwischen der Lichtquelle (1, 201, 301, 401) und dem Detektor (8, 208, 308, 408), ausgebildet ist;
    eine Gas-Zelle (4, 204, 304, 404), welche im Strahlengang zwischen der Lichtquelle (1, 201, 301, 401) und dem Detektor (8, 208, 308, 408) angeordnet ist, so dass der Detektor (8, 208, 308, 408) das durch die Gas-Zelle (4, 204, 304, 404) transmittierte Licht empfängt; und
    ein optisches Element (3, 203, 303, 403), welches im Strahlengang (2, 202, 302) zwischen der Lichtquelle (1, 201, 301, 401) und der Gas-Zelle (4, 204, 304, 404) angeordnet ist;
    wobei die Gas-Zelle (4, 204, 304, 404) eine poröse Keramik (11, 211, 311, 411) enthält; wobei eintretendes Licht innerhalb der Keramik mehrfach reflektiert oder zufällig gestreut wird, bevor es die Keramik wieder verlässt, weshalb die Gas-Zelle (4, 204, 304, 404) eine optische Weglänge aufweist, welche ein Vielfaches der tatsächlichen Schichtdicke der porösen Keramik (11, 211, 311, 411) in der Gas-Zelle (4, 204, 304, 404) ist;
    **dadurch gekennzeichnet, dass** das optische Element (3, 203, 303, 403)

    i. ein optisch transparentes Fenster ist und eine Aufweitung des Lichtstrahls auf Grund der Divergenz des Lichtstrahls erfolgt; oder
    ii. einen Diffusor- oder mindestens ein diffraktives optisches Element umfasst, welche den Lichtstrahl verformt;

    so dass der von der Lichtquelle (1, 201, 301, 401) ausgesandte Lichtstrahl beim Eintritt in die poröse Keramik (11, 211, 311, 411) in der Gas-Zelle (4, 204, 304, 404) aufgeweitet und unfokussiert ist, wodurch sich die auftretenden Interferenzen gegenseitig aufheben und aus dem Messsignal ausgemittelt werden können.

2.  Gasmesssystem gemäss Anspruch 1, **dadurch gekennzeichnet, dass** die optische Weglängen mindestens 10 mal, insbesondere mindestens 50 mal und vorzugsweise mehrere 100mal, länger ist als die tatsächliche Schichtdicke der Gas-Zelle (4, 204, 304, 404).

3. Gasmesssystem gemäss Anspruch 1, **dadurch gekennzeichnet, dass** die Gas-Zelle und/oder die poröse Keramik austauschbar sind.

4. Gasmesssystem gemäss einem der Ansprüche 1 bis 3, **dadurch gekennzeichnet, dass** dieses ein Prozessfenster umfasst.

5. Gasmesssystem gemäss Anspruch 4, **dadurch gekennzeichnet, dass** das optische Element (3, 203, 303, 403) als Prozessfenster wirkt.

6. Gasmesssystem gemäss einem der Ansprüche 1 bis 5, **dadurch gekennzeichnet, dass** dieses ein weiteres optisches Element (9, 209, 309, 409) umfasst, welches zwischen der Gas-Zelle (4, 204, 304, 404) und dem Detektor (8, 208, 308, 408) im Strahlengang (2, 202, 302) angeordnet ist und ein optisches Fenster oder einen Reflektor umfasst.

7. Gasmesssystem gemäss einem der Ansprüche 1 bis 6, **dadurch gekennzeichnet, dass** die kohärente Lichtquelle (1, 201, 301, 401) ein Laser, insbesondere ein durchstimmbarer Laser, ist.

8. Gasmesssystem gemäss einem der Ansprüche 1 bis 7, **dadurch gekennzeichnet, dass** der Detektor (8, 208, 308, 408) ein Photodetektor ist, insbesondere ein Thermophil-Detektor, ein Bolometer, ein Pyroelektrischer Detektor, ein Photomultiplier, eine Photodiode oder ein Photoresistor.

9. Gasmesssystem gemäss einem der Ansprüche 1 bis 8, **dadurch gekennzeichnet, dass** dieses ferner eine der Gas-Zelle (4, 204, 304, 404) vorgeschaltete Probenaufbereitungs-Einheit (7) umfasst.

10. Gasmesssystem nach einem der Ansprüche 1 bis 9, **dadurch gekennzeichnet, dass** die poröse Keramik (11, 211, 311, 411) nano- oder mikro-porös ist.

11. Gasmesssystem nach einem der Ansprüche 1 bis 10, **dadurch gekennzeichnet, dass** die poröse Keramik (11, 211, 311, 411) Zirkonoxid, Aluminiumoxid, Titanoxid, Siliziumoxid, Magnesiumoxid, Yttriumoxid, Galliumphosphid, poröses Silizium oder Mischungen daraus umfasst.

12. Verwendung eines Gasmesssystem gemäss einem der vorangehenden Ansprüche zur Absorptions-spektroskopischen Bestimmung des Gehalts eines oder mehrerer der folgenden Gase: Sauerstoff (O2), Kohlendioxid (CO2), Kohlenmonoxid (CO), Stickoxide (NOx), Methan (CH4), Amine, Ammoniak (NH3), Schwefelwasserstoffe (H2S), Schwefeloxide (SO2), Halogenwasserstoffverbindungen, wie HCl oder HF, Wasser bzw. Feuchte (H2O) oder Mischungen daraus.

**Claims**

1. A gas measurement system, comprising

    a coherent light source (1, 201, 301, 401), which emits a light beam;
    a detector (8, 208, 308, 408);
    a beam path (2, 202, 302), which is formed between the light source (1, 201, 301, 401) and the detector (8, 208, 308, 408);
    a gas cell (4, 204, 304, 404), which is arranged in the beam path between the light source (1, 201, 301, 401) and the detector (8, 208, 308, 408) such that the detector (8, 208, 308, 408) receives the light transmitted through the gas cell (4, 204, 304, 404); and an optical element (3, 203, 303, 403), which is arranged in the beam path (2, 202, 302) between the light source (1, 201, 301, 401) and the gas cell (4, 204, 304, 404); wherein the gas cell (4, 204, 304, 404) comprises a porous ceramic (11, 211, 311, 411); whereby entering light is reflected multiple times or randomly scattered within the ceramic before it then exits the ceramic, wherefore the gas cell (4, 204, 304, 404) has an optical path length which is a multiple of the actual layer thickness of the porous ceramic (11, 211, 311, 411) in the gas cell (4, 204, 304, 404)
    **characterized in that** the optical element (3, 203, 303, 403)

i. is an optically transparent window, and widening of the light beam takes place based on the divergence of the light beam; or
ii. comprises a diffuser or at least one diffractive optical element which deforms the light beam;

such that the light beam emitted by the light source (1, 201, 301, 401) is widened and unfocused when entering the porous ceramic (11, 211, 311, 411) in the gas cell (4, 204, 304, 404);
whereby the interferences that occur cancel each other out and can be filtered from the measuring signal.

2. The gas measurement system according to claim 1, **characterized in that** the optical path length is at least 10 times, particularly at least 50 times, and preferably several hundred times longer than the actual layer thickness of the gas cell (4, 204, 304, 404).

3. The gas measurement system according to claim 1, **characterized in that** the gas cell and/or the porous ceramic are exchangeable.

4. The gas measurement system according to any of claims 1 to 3, **characterized in that** it comprises a process window.

5. The gas measurement system according to claim 4, **characterized in that** the optical element (3, 203, 303, 403) functions as a process window.

6. The gas measurement system according to any of claims 1 to 5, **characterized in that** it comprises a further optical element (9,209, 309, 409), which is arranged in the beam path (2, 202, 302) between the gas cell (4, 204, 304, 404) and the detector (8, 208, 308, 408) and comprises an optical window or a reflector.

7. The gas measurement system according to any of claims 1 to 6, **characterized in that** the coherent light source (1, 201, 301, 401) is a laser, particularly a tunable laser.

8. The gas measurement system according to any of claims 1 to 7, **characterized in that** the detector (8, 208, 308, 408) is a photodetector, particularly a thermopil detector, a bolometer, a pyroelectric detector, a photomultiplier, a photodiode, or a photoresistor.

9. The gas measurement system according to any of claims 1 to 8, **characterized in that** it further comprises a sample preparation unit (7) upstream of the gas cell (4, 204, 304, 404).

10. The gas measurement system according to any of claims 1 to 9, **characterized in that** the porous ceramic (11, 211, 311, 411) is nanoporous or microporous.

11. The gas measurement system according to any of claims 1 to 10, **characterized in that** the porous ceramic (11, 211, 311, 411) comprises zirconium oxide, aluminum oxide, titanium oxide, silicon oxide, magnesium oxide, yttrium oxide, gallium phosphide, porous silicon, or mixtures thereof.

12. Use of a gas measurement system according to any of the preceding claims for the absorption-spectroscopic determination of the content of one or more of the following gases: oxygen ($O_2$), carbon dioxide ($CO_2$), carbon monoxide (CO), nitrogen oxides ($NO_x$), methane ($CH_4$), amines, ammonia ($NH_3$), hydrogen sulfides ($H_2S$), sulfur oxides ($SO_2$), hydrogen halides, such as HCl or HF, water and/or moisture ($H_2O$), or mixtures thereof.


**Revendications**

1. Un système de mesure de gaz comprenant

une source de lumière cohérente (1, 201, 301, 401) émettant un faisceau lumineux ;
un détecteur (8, 208, 308, 408) ;
un trajet de faisceau (2, 202, 302) formé entre la source de lumière (1, 201, 301, 401) et le détecteur (8, 208, 308, 408) ;
une cellule à gaz (4, 204, 304, 404) disposée dans le trajet de faisceau entre la source de lumière (1, 201, 301, 401) et le détecteur (8, 208, 308, 408) de telle sorte que le détecteur (8, 208, 308, 408) reçoive la lumière transmise par la cellule à gaz (4, 204, 304, 404) et un élément optique (3, 203, 303, 403) qui est disposé dans le trajet de faisceau (2, 202, 302) entre la source de lumière (1, 201, 301, 401) et la cellule à gaz (4 204 304, 404) ;
la cellule à gaz (4, 204, 304, 404) comprenant une céramique poreuse (11, 211, 311, 411) ;
la lumière entrante à l'intérieur de la céramique est réfléchie ou dispersée de manière aléatoire plusieurs fois avant de quitter à nouveau la céramique, c'est pourquoi la cellule à gaz (4, 204, 304, 404) ayant une longueur de trajet optique qui comprend multiple de l'épaisseur de couche réelle de la céramique poreuse (11, 211, 311, 411) de la cellule à gaz (4, 204, 304, 404) ;
**caractérisé en ce que** l'élément optique (3, 203, 303, 403)

> i. est une fenêtre optiquement transparente et une expansion du faisceau lumineux se produit en raison de la divergence du faisceau lumineux ou
> ii. un diffuseur ou au moins un élément optique diffractif qui déforme le faisceau lumineux ;

de telle sorte que le faisceau lumineux émis par la source de lumière (1, 201, 301, 401) est dilaté et non focalisé lors de l'entrée dans la céramique poreuse (11, 211, 311, 411) de la cellule à gaz (4, 204, 304, 404) ce qui signifie que les interférences qui se produisent s'annulent et peuvent être moyennées à partir du signal de mesure.

**2.** Système de mesure de gaz selon la revendication 1, **caractérisé en ce que** des longueurs de trajet optique est d'au moins 10 fois, en particulier au moins 50 fois et de préférence une pluralité de 100 fois plus longue que l'épaisseur de couche réelle de la cellule à gaz (4, 204 304, 404).

**3.** Système de mesure de gaz selon la revendication 1, **caractérisé en ce que** la cellule à gaz et/ou la céramique poreuse peut être remplacée.

**4.** Système de mesure de gaz selon l'une des revendications 1 à 3, **caractérisé en ce que** ceci comprend une fenêtre de traitement.

**5.** Système de mesure de gaz selon la revendication 4, **caractérisé en ce que** l'élément optique (3, 203, 303, 403) sert de fenêtre de traitement.

**6.** Système de mesure de gaz selon l'une des revendications 1 à 5, **caractérisé en ce qu'**il s'agit d'un autre optique un élément (9, 209, 309, 409) disposé entre la cellule à gaz (4, 204, 304, 404) et le détecteur (8, 208, 308, 408) dans le trajet de faisceau (2, 202, 302) et comprend une fenêtre optique ou un réflecteur.

**7.** Système de mesure de gaz selon l'une des revendications 1 à 6, **caractérisé en ce que** le La source de lumière cohérente (1, 201, 301, 401) est un laser, en particulier un laser accordable.

**8.** Système de mesure de gaz selon l'une des revendications 1 à 7, **caractérisé en ce que** le détecteur (8 208 308, 408) est un photodétecteur en particulier un détecteur thermophile, un bolomètre, un détecteur pyroélectrique, un photomultiplicateur, une photodiode ou une photorésistance.

**9.** Système de mesure de gaz selon l'une des revendications 1 à 8, **caractérisé en ce qu'**il comprend en outre une unité de préparation d'échantillon (7) connectée en amont de la cellule à gaz (4, 204, 304, 404).

**10.** Système de mesure de gaz selon l'une des revendications 1 à 9, **caractérisé en ce que** la céramique poreuse (11, 211, 311, 411) est nano-ou micro-poreuse.

**11.** Système de mesure de gaz selon l'une des revendications 1 à 10, **caractérisé en ce que** la céramique poreuse (11, 211, 311, 411) est de l'oxyde de zirconium, de l'oxyde de l'alumine, de l'oxyde de titane, de l'oxyde de silicium, de l'oxyde de magnésium, de l'oxyde d'yttrium, du phosphure de gallium, du silicium poreux ou des mélanges de ceux-ci.

**12.** Utilisation d'un système de mesure de gaz selon l'une des revendications précédentes pour la détermination spectroscopique par absorption du contenu d'un ou plusieurs des gaz suivants : de l'oxygène (02), du dioxyde de carbone (CO2),du monoxyde de carbone (CO), des oxydes d'azote (NOx), du méthane (CH4), des amines, de l'ammoniac (NH3), du sulfure d'hydrogène (H2S), des oxydes de soufre (SO2), des composés d'halogénure d'hydrogène tels que HCL ou HF, de l'eau ou de l'humidité (H2O) ou des mélanges de ceux-ci.

**Fig. 1**

**Fig. 2**

**Fig. 3**

**Fig. 4**

403 416 409 408

401 417

404 411

405 406 418

**Fig. 5**

415 411 404 416

408 401

409 403

405 406

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 102621063 B
- CN 202590092 A

- EP 2520924 A1

**In der Beschreibung aufgeführte Nicht-Patentliteratur**

- **T. SVENSSON et al.** *Phys. Rev. Lett.,* 2011, vol. 107, 143901
- **T. SVENSSON et al.** *Opt. Lett,* 2008, vol. 33 (1), 80

- **J. LARSSON et al.** *Appl. Optics,* 2015, vol. 54 (33), 9772